# EUROPEAN PATENT APPLICATION

(11) **EP 4 838 283 A1**
(43) Date of publication of application: **11.11.2026**
(21) Application number: 24926550.5
(22) Date of filing: 22.04.2024
(51) Int. Cl.: G02B 27/01, G02C 5/16, G02C 5/14, G02C 5/00, G02C 11/00

(54) **SMART GLASSES**

(30) Priority: 29.02.2024 CN 202420397145 U
(71) Applicant: SHENZHEN YIWEN TECH LIMITED, Guangdong 518000 (CN)
(72) Inventor: OUYANG, Jian, Shenzhen, Guangdong 518000 (CN)
(74) Representative: Agca Kizil, Tugce
(86) International application number: PCT/CN2024/089156
(87) International publication number: WO 2025/179678

(57) **Abstract**

The present application discloses a pair of smart glasses, including a display module, a frame module, and a battery module. The display module includes an optical engine assembly and a waveguide assembly. The frame module includes a frame assembly and a temple assembly connected to the frame assembly. The frame assembly is connected to the waveguide assembly, and the optical engine assembly and the waveguide assembly are both mounted on the frame assembly. The temple assembly includes a temple and a flexible connector arranged within the temple, and the temple including a frame connecting portion, a temple body, and an earpiece. The battery module is arranged on the earpiece, and the battery module is electrically connected to the optical engine assembly by the flexible connector. The temple body has flexibility, a thickness of the temple body is less than or equal to 5 mm, and a width of the temple body is less than or equal to 10 mm.

## Description

The present application claims the priority to Chinese Patent Application No. 202420397145.9, filed with the China National Intellectual Property Administration on February 29, 2024 and entitled "SMART GLASSES", which is incorporated herein by reference in its entirety.

### Technical Field

The present application relates to the technical field of smart glasses smart glasses, and in particular to a pair of smart glasses.

### Background

At present, in order to conceal some electronic elements, a pair of smart glasses generally needs an receiving cavity in a temple to accommodate and mount electronic elements such as electronic elements, and in order to protect the electronic elements, the receiving cavity is generally made of a rigid material, and since the thickness and width of the temple are both increased, the size and weight of the temple will be increased, thus affecting the aesthetics and wearing experience of the smart glasses. In addition, since the temple of the smart glasses is mostly made of plastic, and thus is rigid and cannot be bent, such that the temple cannot adapt to the shape of the head of a wearer, resulting in poor wearing stability and wearing comfort.

### Summary

The present application provides a pair of smart glasses, which can solve the problems of poor wearing stability and wearing comfort of the smart glasses caused by the large volume and the inability of bending of a temple of the smart glasses.

In a first aspect, the present application provides a pair of smart glasses, including a display module, a frame module and a battery module.

The display module includes an optical engine assembly and a waveguide assembly, the waveguide assembly being configured to receive display light emitted by the optical engine assembly and form outgoing light.

The frame module includes a frame assembly and a temple assembly connected to the frame assembly. The frame assembly is connected to the waveguide assembly, and the optical engine assembly and the waveguide assembly are both mounted on the frame assembly. The temple assembly includes a temple and a flexible connector arranged in the temple, the temple including a frame connecting portion, a temple body and an earpiece, the frame connecting portion being configured for connection with the frame assembly, and the temple body being configured for connection with the frame connecting portion and the earpiece.

The battery module is arranged on the earpiece, and is electrically connected to the optical engine assembly by the flexible connector.

The temple body has flexibility, and a thickness of the temple body is less than or equal to 5 mm and a width of the temple body is less than or equal to 10 mm, to allow the temple to deform according to a size and shape of a head of a wearer.

The present application provides a pair of smart glasses, including a display module, a frame module, and a battery module. The display module includes an optical engine assembly and a waveguide assembly, the waveguide assembly being configured to receive display light emitted by the optical engine assembly and form outgoing light. The frame module includes a frame assembly and a temple assembly connected to the frame assembly. The frame assembly is connected to the waveguide assembly, and the optical engine assembly and the waveguide assembly are both mounted on the frame assembly. The temple assembly includes a temple and a flexible connector arranged in the temple. The temple includes a frame connecting portion, a temple body and an earpiece. The frame connecting portion is configured for connection with the frame assembly. The temple body is configured for connection with the frame connecting portion and the earpiece. The battery module is arranged on the earpiece, and is electrically connected to the optical engine assembly by the flexible connector. The temple body has flexibility, and a thickness of the temple body is less than or equal to 5 mm and a width of the temple body is less than or equal to 10 mm, to allow the temple to deform according to a size and shape of a head of a wearer. Since the temple body has flexibility, curved bending of the temple is enabled and the temple is allowed to deform according to the size and shape of the head of the wearer, such that the smart glasses can adapt to the shapes of the heads of different wearers, and provide a wrapping effect on the shape of the head of the wearer, and the thickness and width of the temple body are reduced, thereby reducing the volume and weight of the smart glasses, making the smart glasses lighter and more aesthetically pleasing, and improving the wearing stability and wearing comfort.

### Brief Description of the Drawings

To describe the technical solutions in the embodiments of the present application more clearly, the following briefly describes the accompanying drawings required for describing the embodiments. Apparently, the accompanying drawings in the following description show some embodiments of the present application, and those of ordinary skill in the art may derive other drawings from these accompanying drawings without creative efforts.
Fig. 1 is a schematic structural diagram of a pair of smart glasses in related art according to an embodiment of the present application;
Fig. 2 is a schematic structural diagram of a pair of smart glasses according to an embodiment of the present application;
Fig. 3 is a schematic structural diagram of another pair of smart glasses according to an embodiment of the present application;
Fig. 4 is a schematic structural diagram of a temple according to an embodiment of the present application;
Fig. 5 is a cross-sectional structural schematic diagram of a temple according to an embodiment of the present application;
Fig. 6 is a cross-sectional structural schematic diagram of another temple according to an embodiment of the present application;
Fig. 7 is a schematic structural diagram of another temple according to an embodiment of the present application;
Fig. 8 is a schematic structural diagram of an earpiece according to an embodiment of the present application;
Fig. 9(a) is a schematic structural diagram of an earpiece according to an embodiment of the present application;
Fig. 9(b) is a schematic structural diagram of an earpiece according to an embodiment of the present application; and
Fig. 10 is a schematic structural diagram of a frame assembly according to an embodiment of the present application.

### DETAILED DESCRIPTION OF EMBODIMENTS

The technical solutions in the embodiments of the present application will be clearly and completely described below in conjunction with the accompanying drawings in the embodiments of the present application. Apparently, the embodiments described are some rather than all of the embodiments of the present application. All other embodiments obtained by those of ordinary skill in the art based on the embodiments of the present application without creative efforts shall fall within the scope of protection of the present application.

The flowcharts shown in the accompanying drawings are merely examples for description, but do not necessarily include all content or operations/steps, and the operations/steps are not necessarily performed in the order described. For example, some operations/steps may alternatively be split, combined, or partially combined, and therefore an actual order of execution may change depending on an actual situation.

It should be understood that terms used in this specification of the present application are only for the purpose of describing specific embodiments, and are not intended to limit the present application. As used in this specification and the appended claims of the present application, the singular forms "a", "an", and "the" are intended to include plural forms, unless otherwise explicitly specified in the context.

It should be understood that the term "and/or" used in this specification and the appended claims of the present application indicates any combination and all possible combinations of one or more items listed in association, and includes the combinations.

Some implementations of the present application are described in detail below with reference to the accompanying drawings. The following embodiments and features in the embodiments may be mutually combined in case of no conflict.

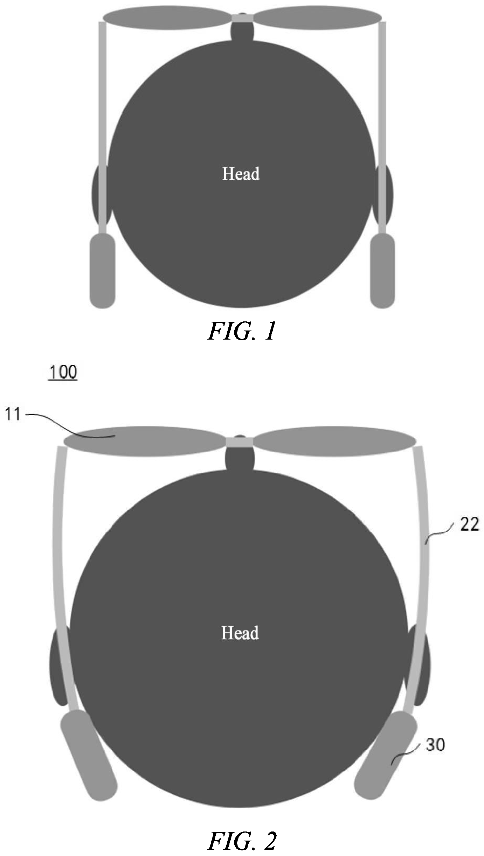

As shown in Fig. 1, since the temple of the smart glasses is mostly made of plastic, and thus is rigid and cannot be bent, such that the temple cannot adapt to and cannot provide a wrapping effect on the shape of the head of a wearer, resulting in poor wearing stability and wearing comfort.

In view of the defects of the prior art, the present application provides a pair of smart glasses. A temple body of the smart glasses has flexibility to enable curved bending of a temple and allow the temple to deform according to the size and shape of the head of a wearer, such that the smart glasses can adapt to the shapes of the heads of different wearers, provide a wrapping effect on the shape of the head of the wearer, and reduce the thickness and width of the temple body, thereby reducing the volume and weight of the smart glasses, and further improving the wearing stability and wearing comfort.

By way of example, the smart glasses may be AR (Augmented Reality) glasses, VR (Virtual Reality) glasses, or any other electronic devices that can be used for AR imaging, such as a smart helmet or other smart wearable devices, which is not specifically limited here.

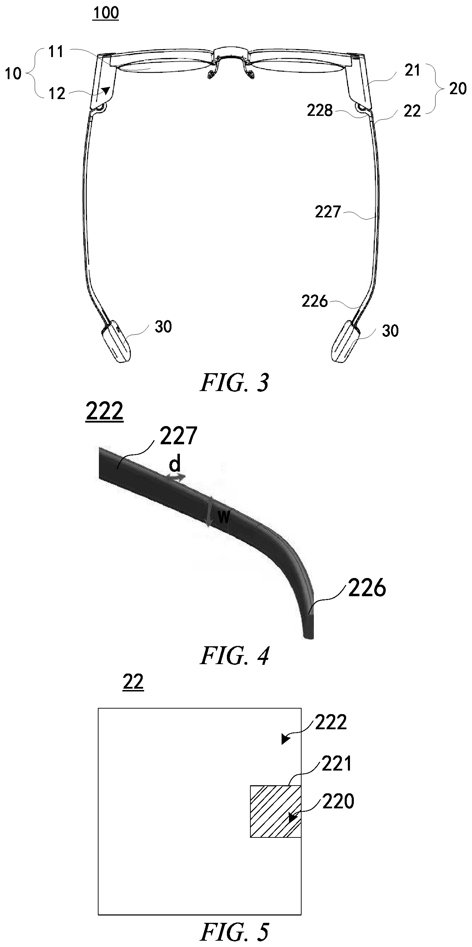

Referring to Figs. 2 and 3, Fig. 2 is a schematic structural diagram of a pair of smart glasses according to an embodiment of the present application; and Fig. 3 is a schematic structural diagram of another pair of smart glasses according to an embodiment of the present application.

As shown in Figs. 2 and 3, a pair of smart glasses 100 includes a display module 10, a frame module 20, and a battery module 30. The display module 10 may include an optical engine assembly 12 and a waveguide assembly 11, where the waveguide assembly 11 is configured to receive display light emitted by the optical engine assembly 12 and form outgoing light. Specifically, the waveguide assembly 11 is provided with a waveguide substrate, a coupled-in grating region and a coupled-out grating region, and the optical engine assembly 12 is connected to a frame assembly 21 and arranged corresponding to the coupled-in grating region. The coupled-in grating region and the coupled-out grating region may be arranged on the waveguide substrate, the coupled-in grating region is configured to couple light into the waveguide substrate, and the coupled-out grating region is configured to couple light propagating within the waveguide substrate out of the waveguide substrate. Light emitted by the optical engine assembly 12 will enter the coupled-in grating region, and the light diffracted by the coupled-in grating region can be totally reflected within the waveguide substrate, thus propagating laterally inside the waveguide assembly 11, until the light reaches the coupled-out grating region to be diffracted again and then is directed to a human eye for imaging.

By way of example, the coupled-in grating region and the coupled-out grating region may also be provided on different surfaces of the waveguide substrate. For example, the coupled-in grating region is provided on a first surface of the waveguide substrate and the coupled-out grating region is provided on a second surface of the waveguide substrate, or the coupled-out grating region is provided on the first surface of the waveguide substrate and the coupled-in grating region is provided on the second surface of the waveguide substrate, provided that the coupled-in grating region is capable of coupled light into the waveguide substrate and the coupled-out grating region is capable of coupled out light propagating within the waveguide substrate.

The frame module 20 includes a frame assembly 21 and a temple assembly 22 connected to the frame assembly 21. The frame assembly 21 is connected to the waveguide assembly 11, and the optical engine assembly 12 and the waveguide assembly 11 are both mounted on the frame assembly 21. The temple assembly 22 includes a temple 222 and a flexible connector 220 arranged within the temple 222. The temple 222 includes an earpiece 226, a temple body 227 and a frame connecting portion 228. The frame connecting portion 228 is configured for connection with the frame assembly 21, and the temple body 227 is configured for connection with the frame connecting portion 228 and the earpiece 226. The battery module 30 is arranged on the earpiece 226, and the battery module 30 is electrically connected to the optical engine assembly 12 by the flexible connector.

The flexible connector may be a circuit connecting member having flexibility, such as a flexible printed circuit (FPC) board or a bendable electrical element such as a flexible wire. The flexible connector is configured to electrically connect the battery module 30 to the optical engine assembly 12, thereby enabling the battery module 30 arranged at a tail end of the temple to supply power to the optical engine assembly 12 through the flexible connector within the temple.

Specifically, the battery module 30 may be arranged on the earpiece 226 of the temple 222, instead of being arranged inside the temple 222, the battery module 30 is mounted on the earpiece 226 by means of adhesive dispensing. Therefore, the mounting of the battery module 30 does not affect the flexibility of the temple 222, and the temple 222 can still deform according to the size and shape of the head of the wearer. Furthermore, the battery module 30 is connected to the flexible connector 220, and thus electrically connected to the optical engine assembly 12 by the flexible connector 220 to supply power to the optical engine assembly 12 and other components. In this way, with the ear-hanging design with the battery module 30 of the smart glasses 100 arranged at the rear, the wearing stability of the smart glasses 100 can be further improved, and the shape of the ear of the wearer is matched to enable fixing of the smart glasses that is worn, thereby achieving the effect of improving the wearing stability of the smart glasses 100.

By arranging the battery module 30 at the earpiece 226, the discomfort caused by downward pressures of nose pads on the nasal bridge is alleviated. On this basis, the ear-hanging design with the battery pack arranged at the rear can improve the wearing stability of the smart glasses 100. Moreover, the downward pressures applied behind the ear increase friction between contact surfaces of silicone on the temple 222 and the ear. In addition, due to the wrapping effect of the flexible temple on the head, the contact area and friction between the battery module 30 and the head can also be increased, thereby further improving the wearing stability of the glasses.

In the related art, the smart glasses generally need to have a receiving cavity formed in the temple for mounting electronic elements such as electronic elements. However, in order to avoid damaging the electronic elements, the electronic elements generally cannot be bent. Therefore, in the related art, the temple of the smart glasses is a rigid temple that cannot be bent.

As shown in Fig. 4, specifically, the temple body 227 has flexibility. A thickness d of the temple body 227 is less than or equal to 5 mm, and a width w of the temple body 227 is less than or equal to 10 mm, to allow the temple to deform according to the size and shape of the head of the wearer. Since the smart glasses according to the present application does not need electronic elements to be mounted inside the temple body 227, and only needs the flexible connector 220 to be arranged inside the temple body 227 to achieve electrical connection between the battery module 30 and the optical engine assembly 12, and the flexible connector 220 is generally a flexible printed circuit board, which has characteristics of high wiring density, light weight, thin thickness, and good bendability, the thickness d and the width w of the temple body 227 can be effectively reduced, thereby reducing the volume and weight of the smart glasses, and further improving the wearing stability and wearing comfort.

As shown in Figs. 2 and 3, in the embodiments of the present application, assemblies such as the optical engine assembly 12 and the waveguide assembly 11 are arranged on the frame assembly 21, and the battery module 30 is arranged at the tail end of the temple, to avoid accommodating electronic elements within the temple. Furthermore, by providing the flexible connector arranged inside the temple, the temple has flexibility, which enables curved bending of the temple and allows the temple to deform according to the size and shape of the head of the wearer, such that the smart glasses 100 can adapt to the shapes of the heads of different wearers, and provide a wrapping effect on the shape of the head of the wearer, thereby improving the wearing stability and wearing comfort.

In some embodiments, the thickness d of the temple body 227 is less than or equal to 2 mm, and the width w of the temple body 227 is less than or equal to 5 mm. Thus, the thickness d and the width w of the temple body 227 can be further reduced according to actual conditions, thereby reducing the volume and weight of the smart glasses 100, and further improving the wearing stability and wearing comfort.

Specifically, the thickness d of the temple body may be 2 mm, and the width w of the temple body is less than or equal to 5 mm. This results in smaller thickness d and width w of the temple body 227 to achieve a smaller size, thereby reducing the volume and weight of the smart glasses 100, making the smart glasses 100 lighter and more aesthetically pleasing, and further improving the wearing stability and wearing comfort.

In some embodiments, the flexible connector may include a flexible printed circuit board. Thus, the electrical connection between the battery module 30 and the optical engine assembly 12 can be achieved by means of a highly reliable and excellent flexible printed circuit board.

The flexible printed circuit board is a highly reliable and excellent flexible printed circuit board made of polyimide or polyester film as a base material. It has the characteristics of high wiring density, light weight, thin thickness and good bendability.

Since the flexible printed circuit board has the characteristics of high wiring density, light weight, thin thickness and good bendability, it can be used as a medium of electrical connection between the battery module 30 and the optical engine assembly 12. Moreover, by disposing the flexible printed circuit board within the temple, and provided that the temple is also made of a flexible material, the temple assembly 22 can have flexibility, enabling the temple to deform according to the size and shape of the head of the wearer.

As shown in Fig. 5, in some embodiments, a receiving groove 221 is formed in the temple 222, and the flexible printed circuit board is housed in the receiving groove 221 and closely fits with the receiving groove 221. Thus, by forming the receiving groove 221 in the temple 222 by means of injection molding, and accommodating the flexible printed circuit board in the receiving groove 221, and embedding the flexible printed circuit board and the temple 222 together by means of plastic, the temple 222 obtained by injection molding can have higher reliability, and is easy to mass produce.

By way of example, the temple 222 may be sealed and fit with the flexible printed circuit board by a soft skin-friendly material such as silicone or rubber by means of in-mold injection molding, such that the temple 222 obtained by injection molding provides the effects of waterproofing, dustproofing, sweat resistance, and ease of bending and processing.

By way of example, the flexible printed circuit board and the temple 222 of titanium alloy may also be formed by using an FPC stiffener, and the flexible printed circuit board, the temple 222, and the FPC stiffener may be integrally formed by means of adhesive dispensing, hot-press lamination, etc.

In some embodiments, the flexible printed circuit board mounted in the temple 222 may be sealed and molded by means of in-mold injection molding to form the temple assembly 22. Thus, by embedding the flexible printed circuit board and the temple 222 together by means of in-mold injection molding, the temple 222 obtained by injection molding can have higher reliability, and is easy to mass produce.

Specifically, the temple 222 is sealed and fit with the flexible printed circuit board by a soft skin-friendly material such as silicone or rubber by means of in-mold injection molding, such that the temple 222 obtained by injection molding provides the effects of waterproofing, dustproofing, sweat resistance, and ease of bending and processing. After the temple 222 and the flexible printed circuit board are integrally formed, the temple 222 can still be bent and adjusted in width and curvature according to the human face, thereby greatly improving the wearing comfort. In addition, the silicone integrally formed by in-mold injection molding is less prone to detachment, thereby effectively ensuring a comfortable tactile sensation at a contact surface between the temple 222 and the human face.

By way of example, the metal temple 222 and the flexible printed circuit board may be used as inserts to be mounted into a mold, and injection molding parameters, such as temperature, pressure and time, may be set. Then, a soft skin-friendly material, such as silicone or rubber, is added to the injection molding material. The injection molding machine is started to inject the molten soft skin-friendly material into the mold for in-mold injection molding. After the injection molding is completed, the injected silicone is connected to the temple 222 as one piece at this time, with the flexible printed circuit board sandwiched between the silicone and the temple 222. The mold and an injection-molded part are cooled at room temperature, and the injection-molded part is removed from the mold. At this point, the injection-molded part removed from the mold is the temple assembly 22.

In some embodiments, the temple 222, the flexible printed circuit board, and the stiffener may be pressed together by means of adhesive dispensing or hot-press lamination to form the temple assembly 22. Thus, the flexible printed circuit board and the temple 222 are embedded together by means of an FPC stiffener, which can highlight the metallic texture of the temple 222 and achieve higher reliability of the temple 222 obtained by injection molding.

Specifically, the flexible printed circuit board and the temple 222 of titanium alloy may also be formed by using an FPC stiffener, and the temple 222, the flexible printed circuit board, and the stiffener are pressed together by means of adhesive dispensing or hot-press lamination to form the temple assembly 22. In the integrally formed temple assembly 22, the titanium alloy faces outward (i.e., the side away from the head of the wearer), and the flexible printed circuit board faces inward (i.e., the side close to the head of the wearer). Thus, the metallic texture of the temple 222 of titanium alloy is highlighted, and a surface of the flexible printed circuit board on the inner side may be coated, such that the temple 222 provides the effects of waterproofing, sweat resistance, dustproofing, and skin-friendliness. The method of fitting of the FPC stiffener can further compress the space for the temple 222, and also ensure the flexible adjustment of the temple 222 for bendable shaping.

It should be noted that a soft skin-friendly material such as silicon and rubber may be used for coating the surface. Alternatively, the temple 222 may be sealed and fit with the flexible printed circuit board by a soft skin-friendly material such as silicon or rubber by means of in-mold injection molding, such that the temple 222 obtained by injection molding provides the effects of waterproofing, dustproofing, sweat resistance, and ease of bending and processing. Alternatively, a silicon sleeve or a rubber sleeve may be mounted on a side of the temple 222 close to the head of the wearer, such that the temple 222 assembled with the silicon sleeve or rubber sleeve also provides the effects of waterproofing, dustproofing, sweat resistance, and ease of bending and processing.

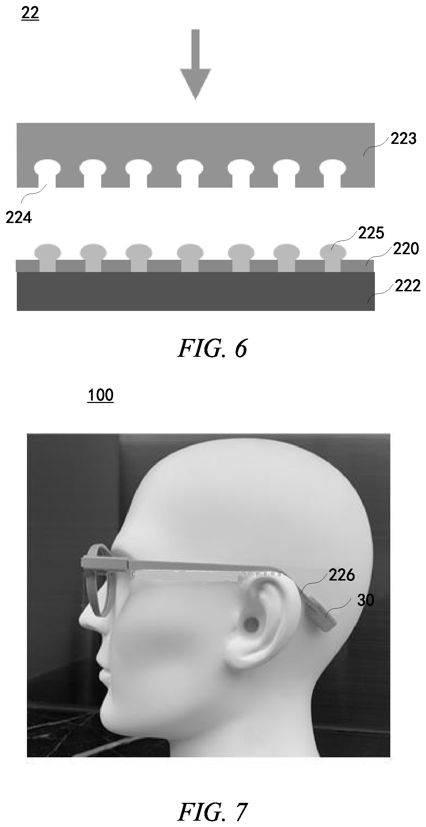

As shown in Fig. 6, in some embodiments, the temple assembly 22 further includes a flexible member 223. The flexible member 223 includes a first connecting part 224, and the temple 222 includes a second connecting part 225. The flexible member 223 is engaged with the temple 222 by means of the first connecting part 224 and the second connecting part 225, so as to seal the flexible connector 220. Thus, the flexible member 223 can be easily removed and replaced, avoiding the problem of yellowing of the flexible member 223 caused by long-term wearing of the smart glasses 100.

The flexible member 223 may be a component formed of a flexible skin-friendly material, such as a molded silicone strip or rubber strip.

Specifically, the flexible member 223 includes the first connecting part 224, and the temple 222 includes the second connecting part 225. The first connecting part 224 can fit with the second connecting part 225 to engage the flexible member 223 with the temple 222. Moreover, the flexible connector 220 may be attached to a side of the temple 222 including the second connecting part 225, such that when the first connecting part 224 and the second connecting part 225 mate with each other, the flexible connector 220 is sandwiched between the flexible member 223 and the temple 222, thereby sealing the flexible connector 220 to form the temple assembly 22.

By way of example, the flexible connector 220 may be attached to the side of the temple 222 including the second connecting part 225 in advance by means of glue, adhesive dispensing, etc, such that when the first connecting part 224 and the second connecting part 225 mate with each other, the flexible connector 220 can be sandwiched between the flexible member 223 and the temple 222.

It should be noted that the flexible member 223 may include a plurality of first connecting parts 224, and the temple 222 may include a plurality of second connecting parts 225. Each first connecting part 224 corresponds to one second connecting part 225 such that each first connecting part 224 mates with a corresponding second connecting part 225, such that the stability of the mating is improved, the flexible connector 220 can be sandwiched between the flexible member 223 and the temple 222, and the fit between the flexible member 223 and the temple 222 is improved.

In some embodiments, the first connecting part 224 includes grooves, and the second connecting part 225 includes protrusions. The protrusion is formed on a surface of the temple 222 by means of in-mold injection molding. Thus, the flexible member 223 can be easily removed and replaced, avoiding the problem of yellowing of the flexible member 223 caused by long-term wearing of the smart glasses 100, and further providing the user with the functionality of removing and customizing the flexible member 223.

The protrusion may be a plastic protrusion, and may be formed by means of in-mold injection molding, etc.

As shown in Fig. 6, specifically, the first connecting part 224 may include grooves, the second connecting part 225 may include protrusions, and when the first connecting part 224 and the second connecting part 225 mate with each other, the protrusions will be inserted into corresponding grooves to achieve snap-fit between the protrusions and the corresponding grooves. After the snap-fit between the protrusions and the corresponding grooves is achieved, the flexible connector 220 can be sandwiched between the flexible member 223 and the temple 222, thereby sealing the flexible connector 220 to form the temple assembly 22.

By way of example, the protrusion may be formed on a flat surface of the temple 222 close to the wearer by means of in-mold injection molding. Corresponding grooves is then formed on the flexible member 223 to mate with the protrusions, thereby achieving a mechanical engagement structure to connect the temple 222, the flexible connector 220 and the flexible member 223. Thus, the flexible member 223 can be easily removed and replaced, avoiding the problem of yellowing of the flexible member 223 caused by long-term wearing of the smart glasses 100, and further providing the user with the functionality of removing and customizing the flexible member 223.

By way of example, since the material of the flexible member 223 is a flexible material, when the user needs to replace the flexible member 223, the user can remove the flexible member 223 by an external force, thereby enabling replacement of the flexible member 223, and improving the wearing experience of the user.

In some embodiments, the second connecting part 225 includes grooves, and the first connecting part 224 includes protrusions. The protrusions are formed on a surface of the flexible member 223 by means of in-mold injection molding. Thus, another snap-fit structure can be provided, and the effects of facilitating the removal and replacement of the flexible member 223 can be achieved, avoiding the problem of yellowing of the flexible member 223 caused by long-term wearing of the smart glasses 100, and the user may be provided with the functionality of removing and customizing the flexible member 223.

Specifically, the first connecting part 224 may include protrusions, the second connecting part 225 may include grooves, and when the first connecting part 224 and the second connecting part 225 mate with each other, the protrusions will be inserted into corresponding grooves to achieve snap-fit between the protrusions and the corresponding grooves. After the snap-fit between the protrusion and the corresponding grooves is achieved, the flexible connector 220 can also be sandwiched between the flexible member 223 and the temple 222, thereby sealing the flexible connector 220 to form the temple assembly 22.

By way of example, the protrusion may be formed on the flexible member 223 by means of in-mold injection molding. Corresponding grooves are then formed on the flat surface of the temple 222 close to the wearer to mate with the protrusions, thereby achieving a mechanical engagement structure to connect the temple 222, the flexible connector 220 and the flexible member 223. Thus, the flexible member 223 can be easily removed and replaced, avoiding the problem of yellowing of the flexible member 223 caused by long-term wearing of the smart glasses 100, and further providing the user with the functionality of removing and customizing the flexible member 223.

It should be noted that if the flexible member 223 includes a plurality of first connecting parts 224, the temple 222 includes a plurality of second connecting parts 225. Each groove corresponds to one protrusion, such that each groove mates with a corresponding protrusion, such that the stability of the mating is improved, the flexible connector 220 can be sandwiched between the flexible member 223 and the temple 222, and the fit between the flexible member 223 and the temple 222 is improved.

In some embodiments, the material of the temple 222 includes a flexible metal or a flexible sheet. Thus, the temple 222 itself has flexibility, thereby enabling curved bending.

The flexible metal may include a shape-memory metal or the like, and the shape-memory metal can undergo plastic deformation within a certain temperature range and then recover its original macroscopic shape within another temperature range. The memory metal may include a copper-based memory alloy, a nickel-titanium alloy, an iron-based alloy, a cobalt-based alloy, a titanium-based alloy, etc. The flexible sheet may include a metal sheet or a soft plastic sheet, as long as it is a sheet material that can achieve flexible bending.

As shown in Fig. 7, in some embodiments, the temple 222 is further configured to be bent at a preset curvature in a first direction, such that an end of the temple 222 away from the frame assembly 21 forms an earpiece 226. The earpiece 226 is configured to fit the with shape of the ear of the wearer to achieve fixation of the smart glasses that is worn. In this way, with the ear-hanging design of the smart glasses 100, the overall wearing stability can be improved, and the shape of the ear of the wearer is matched to enable fixing of the smart glasses that is worn, thereby achieving the effect of improving the wearing stability of the smart glasses 100.

The first direction is a direction perpendicular to the temple 222, i.e., a standing direction of the human body of the wearer. The preset curvature can be determined based on the shape of the ear of the wearer, and may be any curvature, which is not specifically limited here.

Specifically, Since the ear of the wearer is generally located at a tail end of the temple 222, a start point of bending of the earpiece 226 can be set at the tail end of the temple 222 based on the shape and position of the ear of the wearer, and the temple 222 can be bent based on the preset curvature.

The embodiments of the present application can provide an earpiece 226 conforming to the shape of the ear of the wearer at the tail end of the temple 222. The shape of the ear of the wearer is matched to enable fixing of the smart glasses that is worn, thereby achieving the effect of improving the wearing stability of the smart glasses 100.

In some embodiments, an angle corresponding to the preset curvature is determined based on the shape and position of the ear of the wearer. Thereby, the angle corresponding to the preset curvature can be determined based on the shape and position of the ear of the wearer, thereby enabling the earpiece 226 to better fit the ear and head of the wearer, and improving the wearing stability and wearing comfort.

The angle corresponding to the preset curvature may be any angle, for example 150°, which is not specifically limited here.

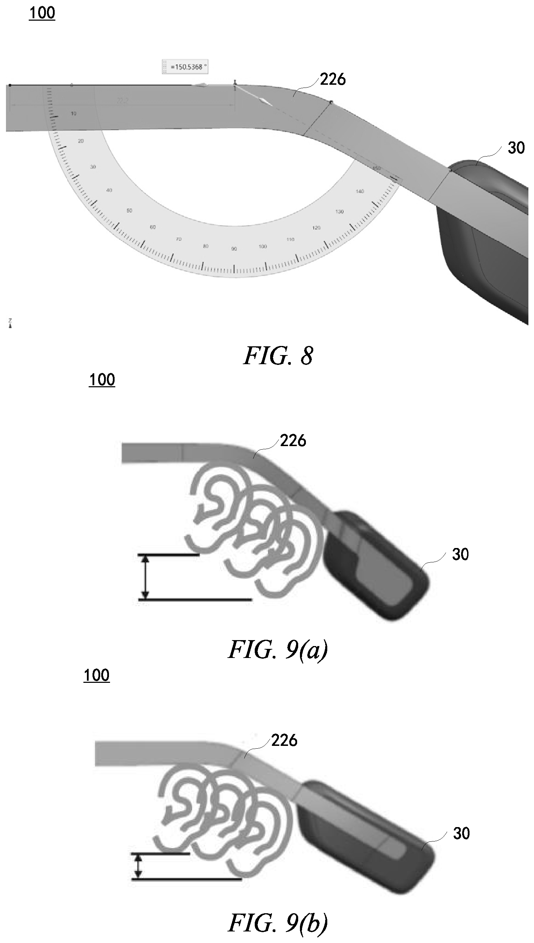

As shown in Fig. 8, by way of example, the temple 222 is further configured to be bent at a preset curvature in a first direction, such that an end of the temple 222 away from the frame assembly 21 forms an earpiece 226. The angle corresponding to the preset curvature may be 150°. Specifically, the angle may be determined based on the shape and position of the ear of the wearer.

In some embodiments, the angle corresponding to the preset curvature is greater than or equal to 150° and less than or equal to 180°. By utilizing the adjustable temple 222 to wrap around the side of the head, it is possible to reduce the amplitude of bending of the earpiece 226, that is, increase the angle corresponding to the preset curvature, thereby avoiding effect on the wearing of the smart glasses 100, and also enabling the smart glasses 100 to adapt to a wider range of head shapes and ear positions of different wearers.

As shown in Fig. 9 (a), in order to improve the wearing stability of the smart glasses 100, it is generally necessary to increase the amplitude of bending of the earpiece 226, that is, decrease the angle corresponding to the preset curvature, such that the earpiece 226 can better match the ear of the wearer to achieve stable wearing. However, if the angle corresponding to the preset curvature is small, for example, the angle corresponding to the preset curvature is in the range of 90°~140°, in this case, the amplitude of bending of the earpiece 226 is large, and the lifting height of the earpiece 226 of the smart glasses 100 is large, which will affect the wearing of the smart glasses 100 and even lead to dizziness symptoms of the wearer.

As shown in Fig. 9 (b), in the embodiment of the present application, the adjustable temple 222 can be used to wrap around the side of the head. In this case, the amplitude of bending of the earpiece 226 does not need to be too large in order to achieve the wearing stability. Thus, the amplitude of bending of the earpiece 226 can be reduced, that is, the angle corresponding to the preset curvature can be increased. For example, the angle corresponding to the preset curvature may be in the range of 150°~180°. In this case, the amplitude of bending of the earpiece 226 is small, and the lifting height of the earpiece 226 of the smart glasses 100 is small, which substantially does not affect the wearing of the smart glasses 100, and also enables the smart glasses 100 to adapt to a wider range of head shapes and ear positions of different wearers.

In some embodiments, the smart glasses 100 includes a main control module, which is electrically connected to the battery module 30. The main control module is configured to control the optical engine assembly 12 to emit light. Thus, the main control module can be powered by the battery module 30 to control the optical engine assembly 12 to emit light.

The main control module may be a PCBA, and the PCBA refers to a product in which electronic elements such as integrated circuits and surface-mounted elements are soldered onto a PCB to realize circuit functions.

For example, the main control module may be arranged on a tail of the temple 222 by means of adhesive dispensing or the like, or may be arranged in the frame assembly 21, and the position of the main control module is not specifically limited here.

In some embodiments, the main control module is arranged at an end of the temple 222 away from the frame assembly 21, and is connected to the optical engine assembly 12 by the flexible connector 220. Thus, the main control module can also be arranged at the tail end of the temple 222, such that the volume and weight of the eyeglasses at a front end are further reduced to allow the front and rear ends of the temple 222 to be balanced, thereby balancing the center of gravity of the smart glasses 100, reducing the wearing discomfort caused by downward pressures of the nose pads on the nasal bridge, and improving the wearing comfort of the user.

Specifically, the main control module may also be arranged at an e end of the temple 222 away from the frame assembly 21 by means of adhesive dispensing, etc., and the main control module may be connected to the optical engine assembly 12 by means of a flexible connector 220, thereby enabling the optical engine assembly 12 to be controlled to emit light. If the main control module and the battery module 30 are not provided as one piece, the main control module may further be electrically connected to the battery module 30 by the flexible connector 220, to allow the battery module 30 to supply power to the main control module.

In some embodiments, the battery module 30 and the main control module are arranged relatively fixedly or provided as one piece. Thus, the overall volume of the smart glasses 100 can be further reduced.

If the main control module and the battery module 30 are not provided as one piece, it is necessary to separately provide a housing for accommodating the main control module and a housing for accommodating the battery module 30 at the end of the temple 222 away from the frame assembly 21, which may result in an excessively large overall volume of the smart glasses 100.

Specifically, the main control module may be arranged within the battery module 30, such that the battery module 30 and the main control module are arranged relatively fixedly or provided as one piece. In this case, the main control module does not need to be electrically connected to the battery module 30 by the flexible connector 220, and the battery module 30 can be directly connected to the main control module to supply power thereto.

In the embodiments of the present application, the battery module 30 and the main control module are arranged relatively fixedly or provided as one piece. Thus, the overall volume of the smart glasses 100 are further reduced, thereby achieving a lightweight design of the smart glasses 100.

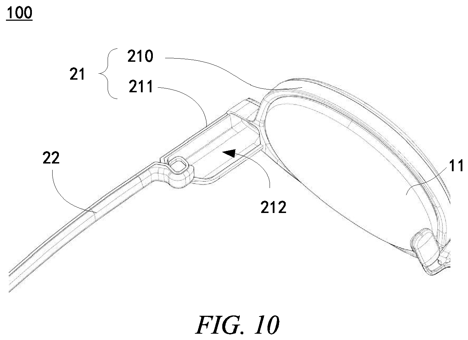

As shown in Fig. 10, in some embodiments, the frame assembly 21 includes a lens mounting member 210 and a temple connector 211 connected to the temple assembly 22 and the lens mounting member 210. The waveguide assembly 11 is connected to a side of the lens mounting member 210 away from the temple connector 211. Thereby, the temple assembly 22 and the waveguide assembly 11 can be connected by means of the lens mounting member 210 and the temple connector 211, and the mounting of the smart glasses 100 can be completed without providing mounting accessories for a frame and an end piece, thereby enabling a plurality of assemblies of the smart glasses 100 to be integrally formed.

The lens mounting member 210 may include a corresponding lens mounting frame, and the waveguide assembly 11 may be mounted within the lens mounting frame. The temple connector 211 may be configured to connect the lens mounting member 210 and the temple assembly 22.

Specifically, the lens mounting member 210 and the temple connector 211 of the frame assembly 21 can cooperate with each other, and the connection between the temple assembly 22 and the waveguide assembly 11 can be completed without providing mounting accessories for the frame and the end piece, thereby enabling a plurality of assemblies of the smart glasses 100 to be integrally formed.

For example, the housings of devices such as the lens mounting member 210, the temple connector 211, and the optical engine assembly 12 are formed by integral die-cast metal forming, thereby enabling a plurality of assemblies of the smart glasses 100 to be integrally formed. Compared with traditional glasses that require mounting accessories for the frame and the end piece for mounting, in the embodiments of the present application, the mounting accessories for the frame and the end piece are saved. Moreover, the frame assembly 21 can further accommodate components such as the optical engine assembly 12 of the smart glasses 100. Thus, the integrally formed frame assembly 21 provides the effects of being screwless, high-precision, ultra-lightweight, low-cost, and excellent mass producibility.

As shown in Fig. 10, in some embodiments, an optomechanical receiving cavity 212 is formed on a side of the lens mounting member 210 close to the temple assembly 22, and the optical engine assembly 12 is housed in the optomechanical receiving cavity 212. Thus, the optical engine assembly 12 can be housed in the optomechanical receiving cavity 212 to prevent the optical engine assembly 12 from being exposed so as to prevent damage to the optical engine assembly 12.

Specifically, the optomechanical receiving cavity 212 may be arranged on an outer side of the front end of the temple 222, thereby enabling the optical engine assembly 12 housed in the optomechanical receiving cavity 212 to be arranged on the outer side of the front end of the temple 222 as well. Such a design can avoid obstruction of the normal field of view during wearing of the smart glasses 100 due to the components such as the optical engine assembly 12 being arranged in front of the field of view of the wearer, thereby improving the wearing comfort of the user.

In some embodiments, a linear distance between the optical engine assembly 12 and the head of the wearer is greater than 20 mm. Thus, the distance between the optical engine assembly 12 and the head of the wearer can be prevented from being too small, which could otherwise cause wearing discomfort of the wearer.

The linear distance between the optical engine assembly 12 and the head of the wearer may be any distance. Generally, if the linear distance between the optical engine assembly 12 and the head of the wearer is greater than 20 mm, the wearing discomfort of the wearer can be effectively reduced.

Specifically, the optomechanical receiving cavity 212 may be arranged at a linear distance greater than 20 mm from the head of the wearer, and the optical engine assembly 12 is housed in the optomechanical receiving cavity 212, such that the optical engine assembly 12 is kept away from the skin around the eye and is more than 20 mm away from the temple of the wearer, which does not cause any wearing discomfort of the wearer.

In some embodiments, the main control module is housed in the optomechanical receiving cavity 212, the main control module is connected to the optical engine assembly 12, and the main control module is electrically connected to the battery module 30 by the flexible connector 220. Thus, both the main control module and the optical engine assembly 12 can be housed in the optomechanical receiving cavity 212, thereby reducing the volume and weight of the frame assembly 21.

Specifically, both the main control module and the optical engine assembly 12 can be connected to the battery module 30 by the flexible connector 220, thereby allowing the battery module 30 to supply power to the main control module and the optical engine assembly 12 and enabling the main control module to control the optical engine assembly 12 to emit light. Since both the main control module and the optical engine assembly 12 are housed in the optomechanical receiving cavity 212, the main control module and the optical engine assembly 12 do not need to be connected by the flexible connector 220. The connection between the main control module and the optical engine assembly 12 can be realized by wired or wireless means, thereby effectively reducing the volume and weight of the frame assembly 21.

In some embodiments, the main control module and the optical engine assembly 12 are arranged relatively fixedly or provided as one piece. Thus, the volume and weight of the frame assembly 21 can be effectively reduced.

To reduce the volume and mass of the optical engine assembly 12 and peripheral hardware circuits, MicroLED optical engine display technology may be used for the optical engine assembly 12 according to the embodiments of the present application. Compared with DLP, LCOS, and LBS technologies, the MicroLED optical engine uses a self-luminous light source display chip and does not need an illumination light source (DLP, LCOS, LBS, and other technologies are of reflective light-emitting type and all require an illumination light source), such that the volume and weight of the optical engine assembly 12 can be greatly reduced. Moreover, a drive circuit in the MicroLED solution is also designed as one piece, such that the drive circuit of the optical engine assembly 12 is simpler and lightweight.

In the embodiments of the present application, the optical engine assembly 12 and the main control module are designed with one stacked behind another, which allows the front end of the overall frame assembly 21 to be elongated in volume, significantly reducing the visual obstruction. With the design of a stack structure of connected flexible and rigid boards, various electronic devices can be arranged with maximum efficiency, and it can be ensured that devices for external interaction can be arranged on a bottom layer of the main control module without being affected by the volume of the optical engine assembly 12.

Specifically, in the absence of the components such as FPC connectors and peripheral hardware circuits, the volume of the optical engine assembly 12 may be designed to be less than 0.3 cm³. Thus, the miniaturization of the optical engine assembly 12 can be achieved, thereby reducing the volume and weight of the optical engine assembly 12.

For example, in the absence of the components such as FPC connectors and peripheral hardware circuits, the volume of the optical engine assembly 12 may be 0.1 cm³, which is not specifically limited here.

The foregoing descriptions are merely specific implementations of the present application, but are not intended to limit the scope of protection of the present application. Any equivalent modification or replacement readily figured out by a person skilled in the art within the technical scope disclosed in the present application shall fall within the scope of protection of the present application. Therefore, the scope of protection of the present application shall be subject to the scope of protection of the claims.

## Claims

1. A pair of smart glasses, **characterized by** comprising:
a display module comprising an optical engine assembly and a waveguide assembly, the waveguide assembly being configured to receive display light emitted by the optical engine assembly and form outgoing light;
a frame module comprising a frame assembly and a temple assembly connected to the frame assembly, the frame assembly being connected to the waveguide assembly, the optical engine assembly and the waveguide assembly being both mounted on the frame assembly, the temple assembly comprising a temple and a flexible connector arranged in the temple, the temple comprising a frame connecting portion, a temple body and an earpiece, the frame connecting portion being configured for connection with the frame assembly, and the temple body being configured for connection with the frame connecting portion and the earpiece; and
a battery module arranged on the earpiece electrically connected to the optical engine assembly by the flexible connector;
wherein the temple body is flexible, and a thickness of the temple body is less than or equal to 5 mm and a width of the temple body is less than or equal to 10 mm, to allow the temple to deform according to a size and shape of a head of a wearer.

2. The pair of smart glasses according to claim 1, **characterized in that** the thickness of the temple body is less than or equal to 2 mm, and the width of the temple body is less than or equal to 5 mm.

3. The pair of smart glasses according to claim 2, **characterized in that** a receiving groove is formed in the temple, and the flexible printed circuit board is housed in the receiving groove and closely fits the receiving groove.

4. The pair of smart glasses according to claim 3, **characterized in that** the flexible printed circuit board mounted in the temple is sealed and molded by means of in-mold injection molding to form the temple assembly.

5. The pair of smart glasses according to claim 3, **characterized in that** the temple, the flexible printed circuit board, and a stiffener are pressed together by means of adhesive dispensing or hot-press lamination to form the temple assembly.

6. The pair of smart glasses according to claim 1, **characterized in that** the temple assembly further comprises a flexible member comprising a first connecting part, the temple comprises a second connecting part, the flexible member being engaged with the temple by means of the first connecting part and the second connecting part so as to seal the flexible connector.

7. The pair of smart glasses according to claim 6, **characterized in that** the first connecting part comprises grooves, and the second connecting part comprises protrusions, the protrusions being formed on a surface of the temple by means of in-mold injection molding.

8. The pair of smart glasses according to claim 1, **characterized in that** the temple is further configured to be bent at a preset curvature in a first direction to form the earpiece, and the earpiece is configured to fit with a shape of an ear part of the wearer to achieve fixing of the smart glasses that is worn, the first direction being a direction perpendicular to the temple.

9. The pair of smart glasses according to claim 8, **characterized in that** an angle corresponding to the preset curvature is determined based on the shape and position of the ear of the wearer.

10. The pair of smart glasses according to claim 8, **characterized in that** the angle corresponding to the preset curvature is greater than or equal to 150° and less than or equal to 180°.

11. The pair of smart glasses according to claim 1, **characterized in that** the battery module is connected to the earpiece by means of adhesive dispensing.

12. The pair of smart glasses according to claim 1, **characterized in that** the smart glasses comprises:
a main control module electrically connected to the battery module and configured to control the optical engine assembly to emit light.

13. The pair of smart glasses according to claim 12, **characterized in that** the main control module is arranged on the earpiece connected to the optical engine assembly by the flexible connector.

14. The pair of smart glasses according to claim 13, **characterized in that** the battery module and the main control module are arranged relatively fixedly or provided as one piece.

15. The pair of smart glasses according to claim 12, **characterized in that** the frame assembly comprises a lens mounting member and a temple connector connected to the temple assembly and the lens mounting member;
wherein the waveguide assembly is connected to a side of the lens mounting member away from the temple connector.

16. The pair of smart glasses according to claim 15, **characterized in that** an optomechanical receiving cavity is formed on a side of the lens mounting member close to the temple assembly, and the optical engine assembly is housed in the optomechanical receiving cavity.

17. The pair of smart glasses according to claim 16, **characterized in that** the main control module is accommodated in the optomechanical receiving cavity, connected to the optical engine assembly, and electrically connected to the battery module by the flexible connector.

18. The pair of smart glasses according to claim 17, **characterized in that** the main control module and the optical engine assembly are arranged relatively fixedly or provided as one piece.

19. The pair of smart glasses according to claim 1, **characterized in that** the flexible connector comprises a flexible printed circuit board.

20. The pair of smart glasses according to claim 1, **characterized in that** a material of the temple comprises a flexible metal or a flexible sheet.

21. The smart glasses according to claim 19, wherein the temple and the flexible printed circuit board are hermetically bonded with soft, skin-friendly materials such as silicone rubber and rubber through in-mold injection molding.

22. The smart glasses according to claim 20, wherein a material of the temple includes a copper-based memory alloy, a nickel-titanium alloy, an iron-based alloy, a cobalt-based alloy, a titanium-based alloy, or a soft plastic sheet.

23. The smart glasses according to claim 21, wherein no electronic components other than the flexible printed circuit boards are housed in the temple.
